# EUROPEAN PATENT APPLICATION

(11) **EP 1 516 773 A1**
(43) Date of publication of application: **23.03.2005**
(21) Application number: 04020349.9
(22) Date of filing: 27.08.2004
(51) Int. Cl.: B60N 2/20, F16C 1/20, F16C 1/10

(54) **A release device for a component of a motor-vehicle seat, including a shape-memory actuator**

(30) Priority: 18.09.2003 IT TO20030715
(71) Applicant: C.R.F. Società Consortile per Azioni, 10043 Orbassano (Torino) (IT)
(72) Inventor: Alacqua, Stefano, 10090 Cascine Vica Rivoli (Torino) (IT); Butera, Francesco, 10100 Torino (IT); Zanella, Alessandro, 10100 Torino (IT); Capretti, Gianluca, Strada Torino 50 10043 Orbassano, Torino (IT)
(74) Representative: Notaro, Giancarlo

(57) **Abstract**

A release device for a component of a motor-vehicle seat comprises a shape-memory actuator (7) which can be actuated either electrically or manually as a tie-rod.

## Description

The present invention relates a release device for a component of a motor-vehicle seat, said device being of the type comprising: a first fixed member; a second member, which is mounted on the first fixed member and can be displaced with respect to the latter between a first position and a second position; a device for locking the second member in its first position; and means for release of said locking device, including a shape-memory actuator.

A release device having all the characteristics indicated above is, for example, described and illustrated in the document DE-C-199 16 244. Said document illustrates a system for releasing a headrest of a rear seat of a motor vehicle in order to enable it to be tipped downwards via elastic means associated thereto when the driver needs to have greater visibility during a reverse manoeuvre and said rear seat is not occupied. The aforesaid known device is, however, designed to be always controlled manually. It comprises a shape-memory metal cable, which is actuated manually at one end and which, on account of the tensile force to which it is subjected, changes state so as to undergo a shortening, which gives rise to a movement of the controlled member that is multiplied with respect to the travel exerted on the control end of the cable.

The purpose of the present invention is to provide a release device for a tippable component of a motor-vehicle seat, such as, for example, a headrest, or else the backrest, which will prove simpler to operate and more efficient as compared to the previously proposed device.

With a view to achieving said purpose, the subject of the invention is a device which presents all the characteristics indicated at the beginning of the present description and is further characterized in that the aforesaid shape-memory actuator comprises: a shape-memory metal cable; means for supplying electrical current through said shape-memory metal cable for causing heating thereof with a resulting variation in length; and a sheath surrounding said shape-memory metal cable, mechanically set between a control member and a controlled member, in parallel with respect to said metal cable, so that said controlled member can be actuated either electrically, by causing activation of the shape-memory metal cable, or manually, by acting on said sheath of the shape-memory metal cable.

The aforesaid metal cable may be a flexible cable or else also a rigid bar. As already described above, the controlled member can have the function of releasing the device for locking any component of a motor-vehicle seat, such as, for example, a headrest of a rear seat (which can thus be tipped downwards to increase the visibility for the driver when he is carrying out a reverse manoeuvre), or the backrest of a seat, for example the backrest of a front seat of a motor vehicle with two side doors, in which said backrest can be tipped forward to facilitate access to the rear seats, or else again the backrest of a rear seat, which can be tipped forward to increase the loading capacity of the boot of a hatchback motor vehicle.

It should be noted that a shape-memory actuator device of the type described above, which enables control of the controlled member by means of electrical actuation or, alternatively, by means of mechanical activation, forms the subject of the international patent application WO03003137 filed in the name of the present applicant. The present invention thus constitutes a new specific application of the actuator device forming the subject of the international patent application referred to above.

Further characteristics and advantages of the invention will emerge from the ensuing description with reference to the annexed drawings, which are provided purely by way of non-limiting example and in which:
- Figure 1 is a perspective view of the frame of a motor-vehicle seat with backrest which can be tipped forward;
- Figure 2 is a schematic side elevation of the seat of Figure 1, which shows the operative position and the position in which the backrest of the seat is tipped forward;
- Figure 3 is a schematic perspective view at an enlarged scale of device for release of the backrest of the seat illustrated in Figures 1 and 2;
- Figure 4 is a schematic cross-sectional view at an enlarged scale of the shape-memory actuator device forming part of the device according to the invention; and
- Figure 5 is a schematic side view, which shows the application of the invention to the headrest of a motor-vehicle seat.

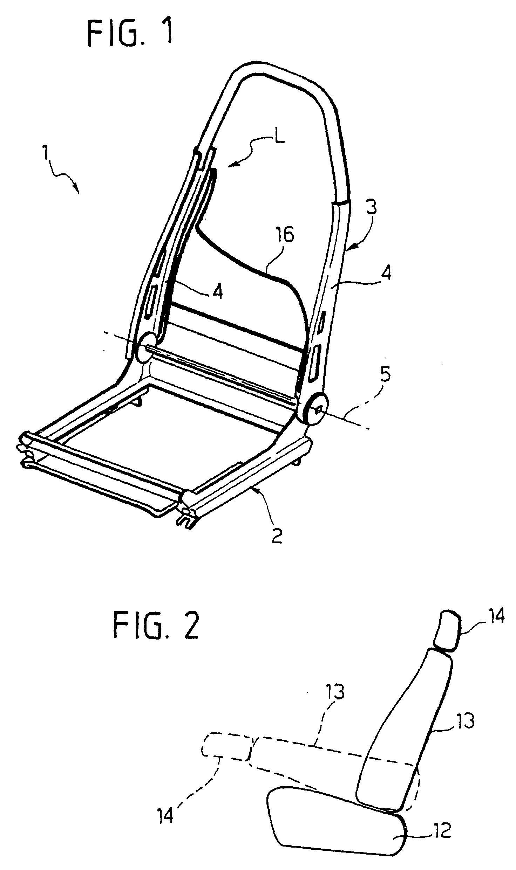

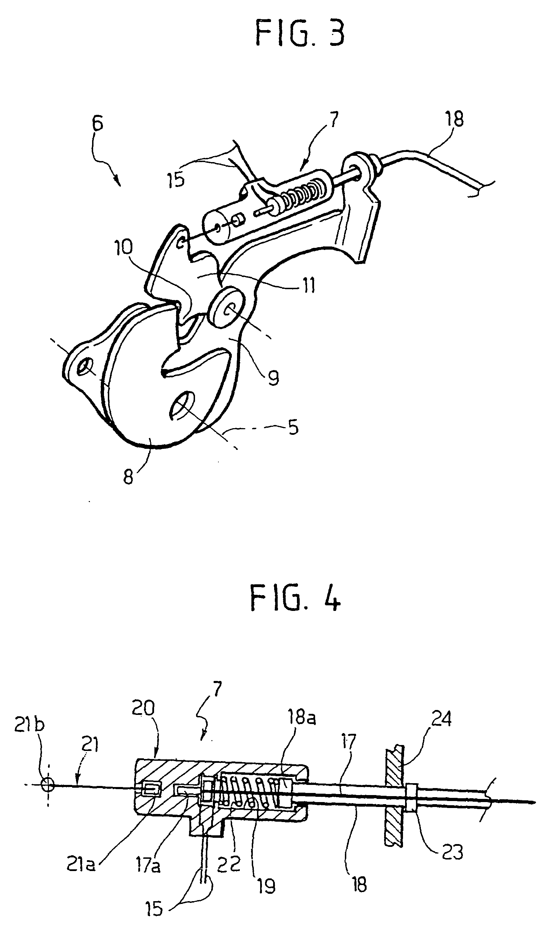

In Figure 1, the reference number 1 designates, as a whole, the frame of a front seat of a motor vehicle, comprising a frame for the seat cushion 2 and a frame 3 for the backrest comprising two side uprights 4, which are mounted articulated at their bottom ends on the seat-cushion frame 2 about a transverse axis 5. Provided in a position corresponding to at least one of the two articulations is a locking device 6, the structure of which is schematically illustrated in Figure 3, and which can be released by means of a shape-memory actuator device 7, the structure of which will be illustrated in what follows. The locking device 6 comprises a first element 8 and a second element 9 mounted articulated to one another about the axis 5 and fixed (by means of any known connection means) to the seat-cushion frame 2 and to the backrest frame 4, respectively, or vice versa. The two elements 8, 9 are withheld in the position of mutual locking following upon the engagement of a tooth 10 against a corresponding arrest surface of the element 8. The tooth 10 forms part of a release lever 11, which can be actuated via the shape-memory actuator device 7.

Figure 3 shows the device in the locked condition. When the actuator device 7 is actuated, it brings about rotation of the release lever 11 about the axis 9 (in a clockwise direction with reference to Figure 3) so as to disengage the tooth 10 from the element 8 and thus enable tipping of the frame 3 of the backrest forward. Figure 2 is a schematic illustration of the seat, with the seat cushion 12 and the backrest 13 equipped with a headrest 14 and represented in the normal operative position by a solid line and in the tipped-forward position by a dashed line. The shape-memory actuator device 7 can be activated either electrically, by supplying current to two terminals 15 (see Figure 3) that are connected to the electrical wiring system of the motor vehicle, or mechanically, by means of a flexible cable 16 (see Figure 1), which is controlled by an actuation lever (not visible in Figure 1) positioned in the proximity of the area designated by L in Figure 1.

The shape-memory actuator device 7 is illustrated in Figure 4. Said device is substantially of the type that has already formed the subject of the international patent application WO03003137 filed in the name of the present applicant. Said device comprises a cable 17 formed by a shape-memory metal alloy designed to undergo a contraction when its temperature exceeds a pre-set threshold value. The ends of the cable 17 are connected to the two terminals 15 in such a way that, if a voltage is applied to said terminals, the cable 17 is traversed by current and is consequently heated by the Joule effect, so as to undergo contraction as a result of the shape-memory mechanism. The contraction of the cable 17 is transmitted to one end 17a, which is connected indirectly (as will be seen) to the release lever 11, so that said lever is released.

As an alternative to the electrical actuation, the actuator 7 can also be actuated manually, using as tie-rod a sheath 18, which surrounds the shape-memory cable 17. As may be seen in Figure 4, the sheath 18 has an end head 18a, which is slidably mounted within the cylindrical cavity 19 of a cylindrical body 20. Secured to the cylindrical body 20 are both an end 17a of the shape-memory cable 17 and an end 21a of a further mechanical cable 21a, the opposite end 21b of which is fastened to the lever 11.

Provided inside the cylindrical cavity 19 of the body 20 is a spring 22, which tends to maintain the end head 18a of the sheath 18 against an end surface of the cavity 19. In addition, the sheath 18 has a contrast collar 23 which rests against a fixed contrast surface 24 when, following upon electrical actuation, the shape-memory cable 17 is shortened.

As has been said, during operation, in the case where current is supplied through the cable 17, the latter is shortened, so that it causes a displacement towards the right (as viewed in Figure 4) of the body 20 and consequently a release of the lever 11 via the additional tie-rod 21. In the case of absence of electrical current or when there is a deliberate intention to proceed to a manual actuation, it is sufficient to act on the right-hand end (not visible in Figure 4) of the sheath 18, displacing it towards the right. Said movement is transmitted to the body 20 following upon engagement of the head 18a of the sheath 18 against the end wall of the cylindrical body 20. Again, the movement of the cylindrical body 20 causes release of the lever 11 via the additional tie-rod 21.

As may be seen, the solution proposed has the advantage of integrating the possibility of an electrical actuation with the possibility of a mechanical actuation, with the further advantage of enabling adaptation of a traditional seat with a minimum number of operations and modifications. The solution according to the invention is further characterized by a considerable reduction of the weight, overall dimensions and production costs as compared to other known solutions which make use of electromagnetic actuators.

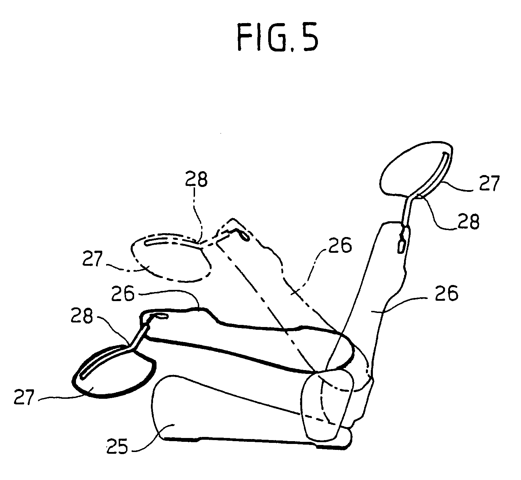

Figure 5 shows schematically a rear seat of a motor vehicle, which has a seat cushion 25, a backrest 26 that can be tipped forward on top of the seat cushion 25, and a headrest 27, the supporting structure 28 of which can be rotated for example backwards, or else also forwards in order to improve the visibility for the driver when he is carrying out a reverse manoeuvre. Also in the case of an application of the type illustrated in Figure 5, there may be envisaged a locking device of the type illustrated in Figure 3 with corresponding unlatching device of the type illustrated in Figure 4.

Furthermore, in the case of application to a headrest, the shape-memory actuator device may also be a bistable actuator, i.e., an actuator that at each actuation can have the function of controlling the movement of the headrest from the upright position to the tipped-down position, or else for controlling the movement of the headrest from the tipped-down position to the upright position, each of said positions being stable when the actuator is inactive. The bistable function may be obtained by associating to an actuator device of the type described a pin/slit guide system of the type that has formed subject of the European patent application EP-A-1 241 351 filed in the name of the present applicant.

Of course, without prejudice to the principle of the invention, the details of construction and the embodiments may vary widely with respect to what is described and illustrated herein purely by way of example, without thereby departing from the scope of the invention. In particular, the shape-memory element may be ether a flexible cable or a rigid bar.

## Claims

1. A release device for a component of a motor-vehicle seat, comprising:
- a first member (2);
- a second member (3), which is mounted on the first member (2) and can be displaced with respect to the latter between a first position and a second position;
- a locking device (6) for locking of the second member (3) in the first position; and
- means (7) for releasing said locking device, including a shape-memory actuator comprising a shape-memory metal element,
said device being **characterized in that** said shape-memory actuator further comprises:
means for supplying electrical current through said shape-memory element for causing heating thereof with a resulting variation in length; and
a sheath (18) surrounding said shape-memory element (17), which is mechanically set between a control member and a controlled member, in parallel with respect to said shape-memory element (17), so that said controlled member can be activated either electrically, causing activation of the shape-memory element (17), or mechanically by exploiting the aforesaid sheath (18) as tie-rod.

2. The device according to Claim 1, **characterized in that** said first member is a seat-cushion frame (2) of a motor-vehicle seat, and said second member (3) is the frame of the backrest of said seat.

3. The device according to Claim 1, **characterized in that** said second member is formed by the supporting structure of a headrest, and said first member is formed by the frame of the seat to which said supporting structure is connected.

4. The device according to Claim 1, **characterized in that** said shape-memory element has one end (17a) fastened to a body (20) that is in turn connected by means of a further tie-rod (21) to the aforesaid controlled member (11), and **in that** said sheath (18) has an end head (18a) slidably mounted in a cylindrical cavity (19) of said body (20) and pushed by a spring (22) towards a contrast position against an end wall of said body (20), so that a mechanical action exerted on the sheath (18) is transmitted to said body (20) and, via said further cable (21), to the controlled member (11) following upon engagement of the aforesaid end head (18a) of the sheath (18) against the aforesaid end wall of the cylindrical body (20).

5. The device according to Claim 1, **characterized in that** associated to said actuator device (7) is a pin-slit guide system of the type forming the subject of the European patent application EP A 1 241 351, in such a way as to bestow on said actuator a bistable operation.
